# EUROPÄISCHE PATENTSCHRIFT

(11) **EP 2 407 268 B1**
(45) Veröffentlichungstag und Bekanntmachung des Hinweises auf die Patenterteilung: **22.08.2012**
(21) Anmeldenummer: 11005759.3
(22) Anmeldetag: 14.07.2011
(51) Int. Cl.: B23K 9/28, B23K 9/29, B23K 9/32, B23K 9/173

(54) **Schweissbrenner mit einer durch ein Innenrohr und einem Isoliermittel gebildeten Gasführung und Ausnehmungen im Innenrohr**
Gas welding burner with a gas supply comprising an internal tube and insulation and openings in the internal tube
Torche de soudage avec une arrivée de gaz composée d'un tuyau interne et d'un isolant et avec des ouvertures dans le tuyau interne

(30) Priorität: 14.07.2010 EP 10401100
(43) Veröffentlichungstag der Anmeldung: 18.01.2012
(73) Patentinhaber: EWM Hightec Welding GmbH, 56271 Mündersbach (DE)
(72) Erfinder: Vetten, Adrian, 57629 Steinebach (DE)
(74) Vertreter: Cohausz & Florack

(56) Entgegenhaltungen:
- EP-A1- 0 074 106
- DE-A1- 4 432 475
- DE-U- 1 848 298
- FR-A1- 2 358 233

## Beschreibung

Die Erfindung betrifft einen Schweißbrenner gemäß dem Oberbegriff des Anspruchs 1 (siehe, z.B., DE 44 32 475 A1).

Schweißbrenner der genannten Gattung werden im Stand der Technik unter anderem zum Metallinertgasschweißen eingesetzt. Beispielsweise ist ein solcher Schweißbrenner in der Druckschrift DE 10 2004 008 609 A1 beschrieben. Bei diesem Schweißbrenner wird der Schweißstrom über die Kontaktdüse dem im Innenrohr befindlichen Schweißdraht zugeführt. Dabei sind die äußeren Teile des Brenners elektrisch von dem Innenrohr isoliert, um ein Fließen von Schweißströmen über das Brennergehäuse zu verhindern. Im Schweißprozess erfolgt eine Erwärmung des Schweißdrahtes und die Wärme wird teilweise in den Schweißbrenner geleitet.

Dabei hat es sich als günstig erwiesen, das im Schweißprozess ohnehin verwendete Schweißgas, das meist ein inertes Schutzgas ist, möglichst effektiv zur Kühlung des Innenrohres einzusetzen. Eine effektive Kühlung des Innenrohres wird erreicht, wenn das Gas in flachen Kanälen an der Außenseite des Innenrohres entlang strömt. Zur Erzeugung von Gasströmungskanälen außen am Innenrohr wird im Stand der Technik ein Mantelrohr auf dem Innenrohr verwendet. Der Verbund aus Innenrohr und Mantelrohr wird dann durch einen Isolierschlauch von einem äußeren Gehäuserohr isoliert. Die Herstellung eines so ausgebildeten Brennerhalses ist aufwändig.

Des Weiteren ist zwischen dem metallischen Brenneranschlussblock, an dem das Innenrohr mit dem Mantelrohr befestigt wird, und dem Außenrohr eine elektrische Isolierung nötig. Diese elektrische Isolierung ist an verfügbaren Brennern eine Schwachstelle bezüglich sicherer elektrischer Isolation und bezüglich mechanischer Stabilität. So kann es bei einer Berührung zwischen einem stromführenden Teil des Schweißbrenners und dem Potenzial eines Werkstücks zu der Ausbildung eines Lichtbogens oder eines Kurzschlusses kommen. Dies kann Beschädigungen des Schweißbrenners oder des Werkstücks, Verletzungen des Schweißers und/oder Brände zur Folge haben. Zwar kann im Stand der Technik eine solche Gefahr vermindert werden, indem stromführende Teile des Schweißbrenners mit einer Isolierschicht versehen werden. Eine solche Isolierschicht kann aber zerstört werden und die Gefahr entsteht aufs Neue.

Es ist daher die Aufgabe der vorliegenden Erfindung, einen Schweißbrenner vorzuschlagen, der einfach und kostengünstig herstellbar ist und bei dem eine sichere elektrische Isolierung der Außenteile des Schweißbrenners gewährleistet ist.

Ein erfindungsgemäßer Brenner ist im Anspruch 1 definiert.

Die Erfindung geht dabei von der Überlegung aus, dass ein Schweißbrenner, der insbesondere durch eine einfache Bauweise gekennzeichnet ist, kostengünstig herstellbar ist und wobei auch das Gewicht reduziert werden kann. Andererseits sollte aber auch eine ausreichende Kühlung des Schweißbrenners bei hoher Belastung gewährleistet sein ohne dabei sicherheitsrelevante Aspekte aus den Augen zu verlieren.

Der erfindungsgemäße Schweißbrenner weist durch Weglassen des im Stand der Technik üblichen Mantelrohres einen einfacheren Aufbau auf, der zu einer wesentlich vereinfachten Herstellung des Schweißbrenners führt. Dieser vereinfachte Aufbau des Brennerhalses ist mit einem gegenüber dem Stand der Technik veränderten Aufbau des Brenneranschlussblocks verbunden.

So wird in dem erfindungsgemäßen Schweißbrenner das Innenrohr nicht am Brenneranschlussblock befestigt, wie es im Stand der Technik üblich ist, sondern es erstreckt sich als ein Rohr in den Brenneranschlussblock hinein oder durch den Brenneranschlussblock hindurch. Der Isolierschlauch kann sich ebenfalls in dem erfindungsgemäßen Schweißbrenner in den Brenneranschlussblock hinein erstrecken. Durch den Isolierschlauch und den Isolierkörper wird eine vollständige elektrische Isolierung des Brenneranschlussblocks von dem Innenrohr erreicht. Eine Isolierung kann aber auch statt eines Isolierschlauchs durch einen Schutzlack oder einem anderen fließfähigen Material gebildet sein. Beispielsweise indem die dem Innenrohr zugewandte Seite des Außenrohres mit einem elektrisch isolierenden Lack versehen ist.

Die elektrische Isolation erfolgt in der Weise, dass der komplette Außenbereich des Schweißbrenners vom Potenzial des Schweißstromes frei ist. Damit ist eine hohe Sicherheit verbunden. Durch die vorliegende Erfindung besteht keine Notwendigkeit zur elektrischen Isolation von Bereichen des Schweißbrenners durch eine äußere Isolierschicht oder in besonderer Weise angebrachte Elemente, wie beispielsweise eine isolierte Schutzgasdüse. Durch die Gaszuführungskanäle im Innenrohr, kann das Schutzgas, welches entlang einer Schweißdrahtführung erst vom Gasvorrat zum Innenrohr geleitet wird, dann über die Gasführungskanäle in den Zwischenraum zwischen Innenrohr und Isolierschlauch bis hin zum Brennerkopf strömen.

Vorzugsweise sind dabei die Gaszuführungskanäle durch im Innenrohr radial verlaufende Bohrungen gebildet. Damit ist eine besonders kostengünstige Art der Herstellung einer Gasverbindung zwischen dem Innenrohr und der Gasführungskanäle im Zwischenraum zwischen Innenrohr und Isolierschlauch ermöglicht.

Die Zuführung des Schutzgases erfolgt dabei zunächst über ein Schlauchpaket durch eine für die Drahtführung, der sogenannten Drahtseele, vorgesehenen Führung und/oder durch die Drahtführung selbst. Möglich ist diese Art der Gasführung, ohne eine separate Gasleitung, dadurch, dass sowohl zwischen der Führung der Drahtseele als auch zwischen der Drahtseele und dem Schweißdraht genügend Raum ist, damit das Schutzgas in den Führungen strömen kann. Vorzugsweise wird das Schutzgas in die Führung der Drahtseele eingeleitet. Diese mündet im Innenrohr, so dass Schutzgas in Richtung Brennerkopf strömen kann. Über geeignete Mittel wird das Schutzgas in die Gasführungskanäle geleitet. Zu diesem Zweck ist erfindungsgemäß das Innenrohr mit Ausnehmungen versehen, die vorzugsweise im Umfang gleichmäßig verteilt eingebracht sind, durch welche sich das Schutzgas um das Innenrohr herum verteilen kann. Das Schutzgas strömt somit ausgehend vom Innenrohr über die Ausnehmungen zu dem Zwischenraum zwischen Innenrohr und Isolierschlauch bzw. gegebenenfalls auch zu dem Zwischenraum zwischen Isolierschlauch und Außenrohr. Auch diese Variante stellt eine erfindungsgemäße Lösung dar, nämlich bei analoger Anwendung der vorliegenden Lehre auf Isolierschlauch und Außenrohr statt Innenrohr und Isolierschlauch mit dem Unterschied, dass die als Gaszuführungskanäle ausgebildeten Ausnehmungen zusätzlich durch Ausnehmungen im Isolierschlauch gebildet sind, welche in einem Zwischenraum zwischen Isolierschlauch und Außenrohr münden.

Die Führung des Schutzgases am äußeren Mantel des Innenrohres bringt insbesondere eine sehr gute Kühlwirkung mit sich, indem sowohl der Brenneranschlussblock, der sich daran anschließende Brennerhals und der Brennerkopf des Schweißbrenners durch das hindurchströmende Schutzgas gekühlt werden.

Ein wesentlicher Vorteil der vorliegenden Erfindung ist es, dass kein zusätzlicher Gasschlauch eingesetzt wird, da das Schutzgas, das erfindungsgemäß auch Kühlgas ist, über die Führung der Drahtseele zum Schweißbrenner geleitet wird.

Bei der vorliegenden Erfindung weist das Innenrohr auf seiner Außenseite, also der dem Isolierschlauch zugewandten Seite und/oder der Isolierschlauch an seiner Innenseite, also der dem Innenrohr zugewandten Seite Gasführungskanäle bildende Strukturen auf. Dadurch kann der bereits im Stand der Technik verwendete Isolierschlauch in dem erfindungsgemäßen Schweißbrenner neben der Aufgabe der elektrischen Isolierung des Innenrohres von dem Außenrohr zusätzlich die Aufgabe der Ausbildung umfangsseitig geschlossener Gaskanäle an der Innenrohraußenwand erfüllen.

In einer Ausführungsform sind die Gasführungskanäle gebildet durch im Innenrohr und /oder im Isolierschlauch axial verlaufende Nuten, in einer anderen Ausführungsform durch eine auf der Außenseite des Innenrohres verlaufende gewindeartige Struktur, insbesondere durch ein auf dem Innenrohr ausgebildetes Außengewinde. Beide Ausführungsformen haben den Vorteil einer besonders einfachen Herstellung. Eine effektive Kühlung lässt sich erreichen, indem die Struktur, beispielsweise die axial verlaufenden Nuten, nur im Innenrohr eingebracht sind, um somit die gegenüber einem Isolator bessere Wärmeleitung eines metallischen Werkstoffes für den Abtransport der Wärme zu nutzen. Selbstverständlich kann jede erdenkliche Struktur für den erfindungsgemäßen Zweck geeignet sein, solange die durch die Struktur gebildeten Hohlräume so einander zugeordnet sind, dass Gasführungskanäle gebildet werden, welche einen Schutzgastransport ausgehend von den Gaszuführungskanälen hin zum Brennerkopf gewährleisten. Da die Kühlung, bedingt durch die Struktur im Innenrohr, wegen der daraus resultierenden Oberfächenvergrößerung verbessert wird, kann durch eine feine und in die Tiefe gehende Struktur der Kühleffekt weiter verbessert werden.

Die Gaszuführungskanäle des Innenrohrs bilden bei dieser Ausführungsvariante die Quellen der Gasführungskanäle am Innenrohr. Vorzugsweise ist jedem Gasführungskanal am Innenrohr ein Gaszuführungskanal im Innenrohr zugeordnet, sodass jeder Gaszuführungskanal als Quelle für einen Gasführungskanal des Innenrohres dient. Durch die jeweilige Zuordnung von Gaszuführungskanälen zu den Gasführungskanälen kann eine günstige Gasströmung, ein geringer Gasströmungswiderstand und somit eine gleichmäßige und verbesserte Kühlung erreicht werden. Der Gasstromwiderstand kann dabei durch eine größere oder kleinere Zahl von Gaszuführungskanälen und/oder unterschiedliche Dimensionierung der Gaszuführungskanäle vergrößert oder verkleinert werden.

In einer besonders bevorzugten Ausgestaltung sind die Gaszuführungskanäle in einem Bereich nahe dem Brenneranschlussblock angeordnet. Da die Gasführungskanäle von diesem Bereich ausgehend zum Brennerkopf hin verlaufen, strömt das Schutzgas über eine maximale Strecke entlang des Innenrohres bis es am Brennerkopf ausströmt, wodurch die Kühlwirkung des Gases weiter verbessert werden kann.

Grundsätzlich ist es in der vorliegenden Erfindung jedoch auch möglich, dass gar keine separaten Gasführungskanäle zwischen Innenrohr und Isolierschlauch vorgesehen sind. Beispielsweise ist es denkbar, den Isolierschlauch aus einem Glasfasergeflecht auszubilden und durch dessen Form, Struktur und Aufbau die Strömung des Schutzgases zu beeinflussen.

In einer ebenfalls günstigen Variante der vorliegenden Erfindung weist der Isolierkörper eine Arretierung oder einen Anschlag für den Isolierschlauch auf. Dabei erstreckt sich der in dem Isolierkörper mündende Isolierschlauch maximal bis an die Arretierung bzw. den Anschlag für den Isolierschlauch, die bzw. der an dem Isolierkörper vorgesehen ist. Die Arretierung kann dazu auf eine besonders einfache Art und Weise durch einen dem Brennerhals zugewandten Abschnitt des Isolierkörpers durch einen vergrößerten Innendurchmesser zur Ausbildung eines Anschlages für den Isolierschlauch gebildet sein.

Der Isolierkörper kann einen zylindrischen Querschnitt aufweisen. Es ist jedoch besonders von Vorteil, wenn der Isolierkörper gemäß einem weiteren Beispiel der vorliegenden Erfindung einen mehreckigen, beispielsweise einen sechseckigen, axialen Querschnitt aufweist. Hierdurch kann der Isolierkörper verdrehsicher in den Brenneranschlussblock eingebracht werden.

In alternativer vorteilhafter Weiterbildung ist der Isolierkörper durch den Isolierschlauch gebildet. Der Isolierschlauch erfüllt dabei die Hauptfunktion des Isolierkörpers, nämlich die elektrische Isolation der stromführenden Teile insbesondere gegenüber dem Handgriff, dem Brennerhals und Schweißbrennergriff. Eine derartige Ausgestaltung des Schweißbrenners kann zu einer Einsparung eines Bauteils und damit auch zu einer Verringerung der Kosten führen.

In einer weiteren Variante ist der Brenneranschlussblock als Isolierkörper ausgebildet. Bei einer derartigen Ausgestaltung kann ebenfalls auf einen separaten Isolierkörper verzichtet werden, da der Brenneranschlussblock zugleich auch als ein Isolierkörper eingesetzt werden kann. Beispielsweise kann der Brenneranschlussblock aus einem Kunststoffmaterial gebildet sein.

Zur Herstellung des erfindungsgemäßen Schweißbrenners können beispielsweise folgende Materialien verwendet werden: für den Brenneranschlussblock und das Außenrohr Kupfer, Aluminium oder Messing, für das Innenrohr Kupfer, Aluminium oder Messing, für den Isolierkörper eine Keramik, ein Kunststoff und für den Isolationsschlauch ein Teflonmaterial. Alternativ können jedoch auch andere geeignete Materialien bzw. Materialkombinationen eingesetzt werden.

In einer vorteilhaften Ausbildung des erfindungsgemäßen Schweißbrenners ist zwischen dem Brenneranschlussblock und dem Außenrohr des Brennerhalses eine mechanisch feste Verbindung vorgesehen. An dem Übergang zwischen Brennerhals und Brenneranschlussblock treten ebenso große mechanische Belastungen wie an anderen Stellen des Brennerhalses auf. Durch die vorgesehene mechanisch feste Verbindung zwischen dem Brenneranschlussblock und dem Außenrohr wird dem erfindungsgemäßen Schweißbrenner an dieser Stelle eine ausreichende Festigkeit gegeben. Vorzugsweise ist die mechanisch feste Verbindung eine metallische Schweiß- oder Lötverbindung. Metallische Schweiß- oder Lötverbindungen sind kostengünstige Verbindungen mit hoher mechanischer Belastbarkeit und mit guter Elastizität. Bei dem erfindungsgemäßen Schweißbrenner ist darauf zu achten, dass entweder solche Materialien und ein solcher Schweißprozess verwendet werden, dass der in der Nähe der Schweißnaht befindliche Isolierschlauch thermisch nicht überlastet wird oder dass der Isolierschlauch erst nach dem Anschweißen des Außenrohres in das Außenrohr eingeführt wird. Statt einer Schweiß- oder Lötverbindung kann auch eine andere geeignete Verbindung, beispielsweise eine Kleb- oder Schraubverbindung, eingesetzt werden.

Gemäß einer günstigen Weiterbildung des erfindungsgemäßen Schweißbrenners ist ein innerer Ringkanal zwischen einer Innenwand des Isolierkörpers und einer Außenwand des Innenrohres vorgesehen, wobei der innere Ringkanal durch eine abschnittsweise Innendurchmesservergrößerung des Isolierkörpers und/oder durch eine abschnittsweise Außendurchmesserverringerung des Innenrohres ausgebildet ist. Dabei kann, wie erwähnt, zur Ausbildung des inneren Ringkanals Material von dem Innenrohr von der Innenseite des Isolierkörpers abgetragen sein, sodass ein ringförmiger Freiraum entsteht, der den inneren Ringkanal bildet. Durch den inneren Ringkanal kann eine zirkular gleichmäßige Gasverteilung weiter verbessert werden. Durch in den Ringkanal mündende Gaszuführungskanäle kann das Schutzgas über den Ringkanal in die Gasführungskanäle strömen. Durch eine derartige Ausgestaltung ist beispielsweise schon ein Gaszuführungskanal im Innenrohr ausreichend für eine gleichmäßige Verteilung des Schutzgases um das Innenrohr.

In einer vorteilhaften Ausführungsform des erfindungsgemäßen Schweißbrenners weist der Isolierkörper auf der dem Brennerhals abgewandten Seite ein Innengewinde zum Eingreifen in ein auf dem Innenrohr ausgebildetes Außengewinde auf. Durch die ineinander greifenden Gewinde von Innenrohr und Isolierkörper kann eine dauerhaft zuverlässige Verbindung realisiert werden, bei der auch die erforderliche Position des Isolierkörpers auf dem Innenrohr einfach eingestellt werden kann. Eine Verbindung zwischen Innenrohr und Isolierkörper kann jedoch auch auf eine andere geeignete Weise, beispielsweise durch Pressen oder Kleben, hergestellt werden.

Bei Verwendung eines Gewindes zur Befestigung des Isolierkörpers auf dem Innenrohr ist in einer günstigen Ausgestaltung der vorliegenden Erfindung zwischen dem Innengewinde des Isolierkörpers und dem Außengewinde des Innenrohres eine Flüssigdichtung vorgesehen. Durch die Verwendung der Flüssigdichtung ist eine einfache Montage des Schweißbrenners möglich, und es wird dennoch eine zuverlässige Gasabdichtung des Gewindes erreicht.

In einem weiteren günstigen Ausführungsbeispiel des erfindungsgemäßen Schweißbrenners ist in dem Brennerkopf ein Brennerkopfanschlag für den Isolierschlauch vorgesehen. Durch den Brennerkopfanschlag ist der Isolierschlauch allseitig von mechanisch formbeständigen Bauteilen umgeben. Dadurch werden eine Lageverschiebung des Isolierschlauches und somit auch ein Ausfall der elektrischen Isolation dauerhaft vermieden. Die Lage des Isolierschlauches kann jedoch auch auf eine andere geeignete Weise mechanisch gesichert werden.

Die Isolation kann in einer Variante der vorliegenden Erfindung noch verbessert werden, wenn der Isolierkörper zum Brenneranschlussblock hin durch eine Flüssigdichtung oder einen O-Ring abgedichtet ist.

Die mit der Erfindung erzielten Vorteile bestehen insbesondere darin, dass durch den erfindungsgemäßen Aufbau des Schweißbrenners, die Schutzgaszufuhr vom Gasvorrat über ein Schlauchpaket mittels der Führung der Drahtseele zum Brenner erfolgen kann, ohne zusätzliche Gasleitungen zu benötigen. Dabei wird das Schutzgas wie auch der Schweißdraht in der Führung zum Schweißbrenner geleitet beziehungsweise transportiert. Durch die Umleitung des Schutzgases, im Bereich nahe dem Brenneranschlussblock, hin zur Außenseite des Innenrohres, wird die zusätzliche Kühlfunktion des Gases weiter verbessert. Durch den erfindungsgemäßen Schweißbrenner mit dem gegenüber dem Stand der Technik vereinfachten Aufbau des Brennerhalses kann zudem das Gewicht gegenüber herkömmlichen Schweißbrennern wesentlich verringert werden.

Bevorzugte Ausführungsformen der vorliegenden Erfindung, deren prinzipieller Aufbau, deren Funktion und Vorteile sollen im Folgenden anhand von Figuren näher erläutert werden, wobei
Figur 1 schematisch einen Längsschnitt durch einen Abschnitt einer Ausführungsform des erfindungsgemäßen Schweißbrenners zeigt;
Figur 2 schematisch einen Querschnitt durch eine Ausführungsform des erfindungsgemäßen Schweißbrenners an der in Figur 1 markierten Position A zeigt;

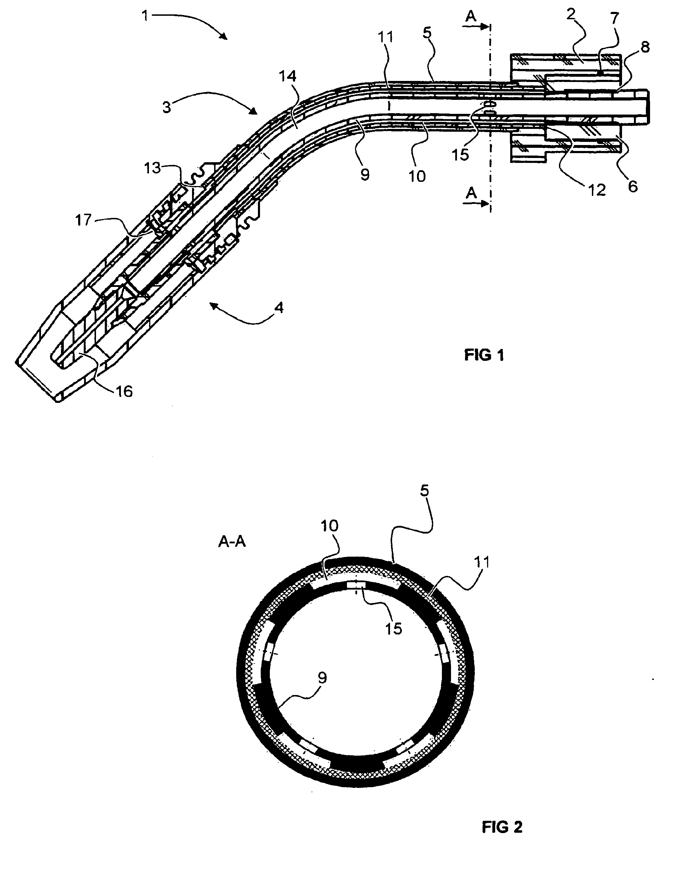

Fig. 1 ist eine schematische Darstellung eines Abschnittes einer Ausführungsform eines erfindungsgemäßen Schweißbrenners 1 in einem Längsschnitt durch die Mitte des Schweißbrenners 1. Der Schweißbrenner 1 weist einen Brenneranschlussblock 2, der in einem Handgriff für manuelles Schweißen oder in einem Schweißroboter integriert sein kann, einen mit einem Ende an dem Brenneranschlussblock 2 anschließenden Brennerhals 3 und einen am anderen Ende des Brennerhalses 3 vorgesehenen Brennerkopf 4 auf. An dem Brennerkopf 4 ist eine Schutzgasdüse vorgesehen.

Der Brenneranschlussblock 2 ist in dem dargestellten Ausführungsbeispiel zylinderförmig ausgeführt und weist eine durchgängige Innenbohrung mit sich abschnittsweise ändernden Bohrungsdurchmessern, aber identischer Mittelachse auf. An seiner dem Brennerhals 3 abgewandten Seite weist der Brenneranschlussblock 2 einen Bohrungsabschnitt mit größerem Durchmesser auf, wobei an der dem Brennerhals 3 zugewandten Seite des Brenneranschlussblocks 2 ein Bohrungsabschnitt mit geringerem Durchmesser vorgesehen ist. Der Bohrungsabschnitt weist an der Schnittstelle zum Brennerhals 3 eine stufenförmige Aufweitung auf, wobei durch die Stufe ein Anschlag für ein Außenrohr 5 des Brennerhalses 3 ausgebildet ist. Der Innendurchmesser des Bohrungsabschnittes auf der dem Brennerhals abgewandten Seite ist größer als der der Aufweitung.

In den Bohrungsabschnitt auf der dem Brennerhals abgewandten Seite des Brenneranschlussblocks 2 ist ein Isolierkörper 6, der aus einem elektrisch isolierenden Material, wie beispielsweise Kunststoff oder Keramik, besteht, eingesetzt. Der Isolierkörper 6 weist in dem gezeigten Ausführungsbeispiel einen zylindrischen Querschnitt in axialer Richtung des Schweißbrenners 1 auf, kann jedoch in anderen, nicht gezeigten Varianten der Erfindung beispielsweise auch einen mehreckigen, z. B. sechseckigen, axialen Querschnitt aufweisen, wodurch er verdrehsicher in dem Brenneranschlussblock 2 eingebaut werden kann.

Der Isolierkörper 6 ist gegenüber dem den Isolierkörper 6 aufnehmenden Bohrungsabschnitt durch einen O-Ring 7, der in eine Mantelfläche des Bohrungsabschnittes eingelassen ist, gasdicht abgedichtet. Anstelle des O-Rings 7 kann in anderen, nicht gezeigten Ausführungsformen der vorliegenden Erfindung beispielsweise auch eine Flüssigdichtung eingesetzt werden, um den Isolierkörper 6 zum Brenneranschlussblock 2 abzudichten.

Der Isolierkörper 6 weist eine Innenbohrung und in dieser ein Gewinde 8 auf. Dieses Gewinde 8 steht in Eingriff mit einem Rohrgewinde eines durch den Brennerhals 3 und in den Brenneranschlussblock 2 führenden Innenrohres 9. Die Gewindekopplung ist vorzugsweise gasdicht abgedichtet.

Das Innenrohr 9, welches durch den Brennerhals 3 führt und sich in den Brenneranschlussblock 2 hinein fortsetzt, weist in dem gezeigten Ausführungsbeispiel an seiner Außenseite beispielsweise in Fig. 2 dargestellte parallele, um den Umfang des Innenrohres 9 gleichmäßig verteilte, flache, separate Gasführungskanäle 10 auf, die durch in das Innenrohr 9 eingebrachte Nuten und einen über das Innenrohr 9 gezogenen Isolierschlauch 11 gebildet sind. Die Gasführungskanäle 10 erstrecken sich ausgehend von einem Breich nahe des Brenneranschlussblocks 2 über den gesamten Brennerhals 3 bis hin zu der Schutzgasdüse im Brennerkopf 4. Grundsätzlich können auch Gasführungskanäle 10 zusätzlich oder stattdessen an oder in der Innenwand des Isolierschlauches 11 vorgesehen sein. Das Schutzgas wird am brenneranschlussblockseitigen Ende des Innenrohres 9, mittels eines hier nicht dargestellten mit dem Innenrohrende verbundenen Schlauchpaketes eingeleitet.

Das Schlauchpaket ist gebildet durch einen ersten und einen zweiten inneren schlauchförmigen Körper, wobei der erste als Drahtseele und der zweite als Führung der Drahtseele dient und die Drahtseele umgibt. Um den zweiten schlauchförmigen Körper herum ist ein Drahtgeflecht angeordnet, das den Schweißbrenner mit Schweißstrom versorgt. Dazu ist das Drahtgeflecht mit dem Innenrohr 9 elektrisch verbunden. Das Drahtgeflecht ist abschließend von einem elektrisch isolierenden Schutzmantel umgeben. Brennerseitig dient das Innenrohr als Führung 14 der Drahtseele, wobei die Drahtseele durch das Innenrohr hindurch bis in den Brennerkopf verläuft und an der Stirnseite einer Stromkontaktdüse 16 endet, wobei die Stromkontaktdüse 16 stirnseitig eine konisch verlaufende Öffnung aufweist.

Das Innenrohr 9 besteht vorzugsweise aus einem Metall mit guter elektrischer und thermischer Leitfähigkeit. Beispielsweise haben sich hierfür Kupfer, Aluminium oder Messing bewährt. Das Innenrohr 9 ist zumindest innerhalb des Brennerhalses 3 vollumfänglich vom Isolierschlauch 11 umgeben, welcher ein Außenrohr 5 des Brennerhalses 3 elektrisch von dem Innenrohr 9 isoliert. Der Isolierschlauch 11 besteht aus einem flexiblen, elektrisch isolierenden Material und weist eine hohe Temperaturfestigkeit auf. Beispielsweise haben sich als Materialien für den Isolierschlauch 11 PTFE (Polytetrafluorethylen)-Materialien bewährt. In dem dargestellten Ausführungsbeispiel ist der Isolierschlauch 11 durch einen Anschlag 12 an dem Isolierkörper 6 und einen Brennerkopfanschlag 13 an dem Brennerkopf 4 gegen eine laterale Verschiebung gesichert. Der Anschlag 12 wird durch eine Aufweitung der Innenbohrung des Isolierkörpers 6 gebildet, wobei die Aufweitung einen größeren Durchmesser als der Isolierschlauch 11 aufweist.

Innerhalb des Brenneranschlussblocks 2 ist eine vollständige Isolierung des Innenrohres 9 vorgesehen. Auf der Seite des Brennerhalses 3 erfüllt das in den Brenneranschlussblock 2 hineinragende Ende des Isolierschlauches 11 die Funktion einer elektrischen Isolation, anschließend wird die Isolation durch den Isolierkörper 6 erreicht. Der Isolierkörper 6 ist auch eine mechanische Halterung für das Innenrohr 9 innerhalb des Brenneranschlussblocks 2.

Ist der Isolierkörper 6 in den dafür vorgesehenen Bohrungsabschnitt eingeführt, schlägt eine Stirnfläche des Isolierkörpers 6 an einem Boden des Bohrungsabschnittes an.

Um ein Verrutschen des Isolierkörpers 6 entgegenzuwirken, kann beispielsweise ein Stift außermittig durch den dem Isolierkörper zugeordneten Bohrungsabschnitt, rechtwinklig zu dessen Längsachse, eingebracht werden, oder über ein in den Mantel des Brenneranschlussblocks 2 eingebrachtes Gewinde kann über eine Schraube auf den Außenmantel des Isolierkörpers 6 drücken.

Der das Innenrohr 9 auf einem Teil seiner Länge umgebende Isolierschlauch 11 ist soweit auf dem Innenrohr 5 geführt, dass er durch die Bohrungsabschnitte und den Isolierkörper hindurch reicht. Anstelle des Anschlags 12 und/oder des oben erwähnten Brennerkopfanschlags 13 kann auch eine Arretierung des Isolierschlauches 11 an dem Isolierkörper 6, die beispielsweise durch wenigstens eine Schraube oder Klemme realisiert ist, vorgesehen sein.

Fig. 2 zeigt schematisch einen axialen Querschnitt durch den Brennerhals 3 nach der Ausführungsform des erfindungsgemäßen Schweißbrenners 1 aus Fig. 1 an der mit A bezeichneten Position. An der Außenseite des Innenrohres 9 sind Gasführungskanäle 10 ausgebildet. Außerhalb des Innenrohres 9 ist der Isolierschlauch 11 vorgesehen, welcher das Außenrohr 5 elektrisch von dem Innenrohr 9 isoliert. In das Innenrohr 9 sind fünf als Gaszuführungskanäle dienende Ausnehmungen 15 eingebracht, welche jeweils in einen Gasführungskanal 10 münden.

Im Folgenden soll die Funktionsweise der in den Figuren 1 und 2 dargestellten Ausführungsform des erfindungsgemäßen Schweißbrenners 1 näher erläutert werden.

In dem erfindungsgemäßen Schweißbrenner 1 verläuft die Gasführung ausgehend vom Innenrohr 9 durch den Brennerhals 3 entlang der zwischen dem Innenrohr 9 und dem Isolierschlauch 11 vorgesehenen Gasführungskanäle 10 im Wesentlichen getrennt von der Drahtseele mit dem Schweißdraht, die in der Führung 14 geführt wird. Das Schutzgas wird über das Schlauchpaket, welches ebenfalls eine Führung für die Drahtseele enthält und in der das Schutzgas hindurchströmt, in das Innenrohr 9 eingebracht. Durch das Innenrohr 9 wird das Schutzgas zunächst über die Führung 14, zwischen der Führung 14 und der Drahtseele, geleitet und gelangt damit, aufgrund eines sich im Innenrohr bildenden Staudrucks, in die Gaszuführungskanäle 15. Ein unwesentlicher Teil des Schutzgase strömt weiter in der Führung 14 bis in den Brennerkopf 4. Die Gaszuführungskanäle 15 stehen in Verbindung mit den Gasführungskanälen 10, über welche das Schutzgas entlang dem Brennerhals 3 über einen Gasverteiler 17 in die am Brennerkopf 4 vorgesehene Schutzgasdüse hineinströmt und von da aus zur Schweißstelle gelangt.

Die Stromführung, die der Stromversorgung des Schweißdrahtes dient, erfolgt in den gezeigten Ausführungsbeispiel über das Innenrohr 9. Dieses weist einen Anschluss für den elektrischen Strom, den Schweißstrom, auf. Dieser Anschluss ist in den Figuren nicht dargestellt. Über das Innenrohr 9 wird der Schweißstrom über geeignete Mittel, wie Draht, Kontaktdüse oder Düsenstock, zur Schweißstelle geleitet. Dazu ist das Innenrohr 9 vollständig gegenüber den anderen Elementen des Schweißbrenners 1 isoliert, sodass diese nicht das Potenzial der stromführenden Teile des Schweißbrenners 1 aufweisen. Die Isolierung zwischen dem Innenrohr 9 und dem Brenneranschlussblock 2 erfolgt über den Isolierkörper 6. Bei der Durchführung des Innenrohrs 9 durch den Brenneranschlussblock 2 durch den ersten Bohrungsabschnitt hindurch erfolgt die Isolation zwischen dem Brenneranschlussblock 2 und dem Innenrohr 9 durch den Isolierschlauch 11. Dieser übernimmt weiterhin die Isolation zwischen dem Innenrohr 9 und dem Außenrohr 5 über die gesamte Länge des Brennerhalses 3 hinweg. Die Übertragung des Schweißstromes auf den Schweißdraht erfolgt im Brennerkopf 4 über die Stromkontaktdüse 16 in einer den Schweißdraht führenden zentrisch in der Stromkontaktdüse 16 verlaufenden Bohrung.

Der erfindungsgemäße Brenner ist spezifisch auf eine effektive und sichere Kühlung insbesondere im Bereich des Brennerhalses 3 ausgerichtet. Diese Art der Kühlung ist möglich, indem das bei herkömmlichen Schweißbrennern sonst erst im oder in einem Bereich nahe dem Brennerkopf 4 aus dem Innenrohr 9 ausströmende Schutzgas bereits in einem Bereich nahe des Brenneranschlussblockes 2 aus dem Innenrohr 9 zu dessen Außenseite umgeleitet wird. Das Schutzgas strömt dann über die Gasführungskanäle 10 zwischen Innenrohr 9 und Isolierschlauch 11, wodurch gegenüber Schweißbrennern aus dem Stand der Technik wesentlich mehr Wärme abtransportiert werden kann.

### Bezugszeichenliste

1. Schweißbrenner-Abschnitt
2. Brenneranschlussblock
3. Brennerhals
4. Brennerkopf
5. Außenrohr
6. Isolierkörper
7. O-Ring
8. Gewinde/Gewindekopplung
9. Innenrohr
10. Gasführungskanäle
11. Isolierschlauch
12. Anschlag (Brenneranschlussblock)
13. Anschlag (Brennerkopf)
14. Führung (Drahtseele)
15. Gaszuführungskanäle
16. Stromkontaktdüse
17. Gasverteiler

## Patentansprüche

1. Schweißbrenner (1) mit einer Schutzgaszuführung, einem Brenneranschlussblock (2), einem an einem Ende an den Brenneranschlussblock (2) anschließenden Brennerhals (3) und einem am anderen Ende des Brennerhalses (3) vorgesehenen Brennerkopf (4), wobei der Brennerhals (3) ein Innenrohr (9), ein Außenrohr (5) und einen zwischen dem Innenrohr (9) und dem Außenrohr (5) vorgesehenen Isolierschlauch (11) aufweist, **dadurch gekennzeichnet, dass** in dem Brenneranschlussblock (2) ein Isolierkörper (6) vorgesehen ist, durch welchen das Innenrohr (9) in den Brenneranschlussblock (2) führt, wobei das Innenrohr (9) an seiner dem Außenrohr (5) zugewandten Seite und/oder der Isolierschlauch (11) an seiner dem Innenrohr (9) zugewandten Seite Gasführungskanäle (10) bildende Strukturen und das Innenrohr (9) als Gaszuführungskanäle ausgebildete Ausnehmungen (15) aufweist.

2. Schweißbrenner (1) nach Anspruch 1, **dadurch gekennzeichnet, dass** der Isolierkörper (6) auf seiner dem Brennerhals (3) abgewandten Seite ein Innengewinde (8) zum Eingreifen in ein auf dem Innenrohr (9) ausgebildetes Außengewinde (8) aufweist.

3. Schweißbrenner (1) nach Anspruch 1 oder 2, **dadurch gekennzeichnet, dass** zwischen dem Innengewinde (8) des Isolierkörpers (6) und dem Außengewinde (8) des Innenrohres (9) eine Flüssigdichtung vorgesehen ist.

4. Schweißbrenner (1) nach mindestens einem der Ansprüche 1 bis 3, **dadurch gekennzeichnet, dass** der Isolierkörper (6) eine Arretierung oder einen Anschlag (12) für den Isolierschlauch (11) aufweist.

5. Schweißbrenner (1) nach mindestens einem der Ansprüche 1 bis 4, **dadurch gekennzeichnet, dass** der Isolierkörper (6) einen mehreckigen axialen Querschnitt aufweist.

6. Schweißbrenner (1) nach mindestens einem der Ansprüche 1 bis 5, **dadurch gekennzeichnet, dass** der Isolierkörper (6) durch den Isolierschlauch (11) gebildet ist.

7. Schweißbrenner (1) nach mindestens einem der Ansprüche 1 bis 6, **dadurch gekennzeichnet, dass** der Brenneranschlussblock (2) als Isolierkörper ausgebildet ist.

8. Schweißbrenner (1) nach mindestens einem der Ansprüche 1 bis 7, **dadurch gekennzeichnet, dass** zwischen dem Brenneranschlussblock (2) und dem Außenrohr (5) des Brennerhalses (3) eine mechanisch feste Verbindung vorgesehen ist.

9. Schweißbrenner (1) nach Anspruch 8, **dadurch gekennzeichnet, dass** die mechanisch feste Verbindung eine metallische Schweißverbindung, eine Lötverbindung, eine Klebeverbindung oder eine Schraubverbindung ist.

10. Schweißbrenner (1) nach mindestens einem der Ansprüche 1 bis 9, **dadurch gekennzeichnet, dass** in dem Brennerkopf (4) ein Brennerkopfanschlag (13) für den Isolierschlauch (11) vorgesehen ist.

11. Schweißbrenner (1) nach mindestens einem der Ansprüche 1 bis 10, **dadurch gekennzeichnet, dass** der Isolierkörper (6) zum Brenneranschlussblock (2) hin durch eine Flüssigdichtung oder einen O-Ring abgedichtet ist.

12. Schweißbrenner (1) nach mindestens einem der Ansprüche 1 bis 11, **gekennzeichnet durch** Gaszuführungskanäle (15) in einem Bereich nahe dem Brenneranschlussblock (2).

13. Schweißbrenner (1) nach mindestens einem der Ansprüche 1 bis 12, **dadurch gekennzeichnet, dass** die Gaszuführungskanäle (15) durch im Innenrohr (9) radial verlaufende Bohrungen gebildet sind.

14. Schweißbrenner (1) nach mindestens einem der Ansprüche 1 bis 13, **gekennzeichnet durch** Gasführungskanäle (10) gebildet **durch** im Innenrohr (9) und/oder im Isolierschlauch (11) axial verlaufende Nuten.

15. Schweißbrenner (1) nach mindestens einem der Ansprüche 1 bis 14, **dadurch gekennzeichnet**, durch Gasführungskanäle (10) gebildet durch eine auf der Außenseite des Innenrohres (9) verlaufende gewindeartige Struktur.

16. Schweißbrenner (1) nach mindestens einem der Ansprüche 1 bis 15, **dadurch gekennzeichnet, dass** jedem Gasführungskanal (10) mindestens ein Gaszuführungskanal (15) zugeordnet ist.

17. Schweißbrenner (1) nach mindestens einem der Ansprüche 1 bis 16, **dadurch gekennzeichnet, dass** der Isolierschlauch (11) aus einem Glasfasergeflecht gebildet ist.

## Claims

1. A welding torch (1) with a protective gas supply, a torch connection block (2), a torch neck (3) which connects to the torch connection block (2) at one end, and a torch head (4) provided at the other end of the torch neck (3), wherein the torch neck (3) has an inner pipe (9), an outer pipe (5) and an insulating hose (11) provided between the inner pipe (9) and the outer pipe (5), **characterised in that** an insulating body (6) is provided in the torch connection block (2), through which the inner pipe (9) leads into the torch connection block (2), wherein the inner pipe (9) on its side facing the outer pipe (5) and/or the insulating hose (11) on its side facing the inner pipe (9) has structures forming gas guide channels (10) and the inner pipe (9) has recesses (15) constructed as gas supply channels.

2. The welding torch (1) according to Claim 1, **characterised in that** the insulating body (6) has an internal thread (8) for engaging into an external thread (8) formed on the inner pipe (9) on the side thereof facing away from the torch neck (3).

3. The welding torch (1) according to Claim 1 or 2, **characterised in that** a liquid seal is provided between the internal thread (8) of the insulating body (6) and the external thread (8) of the inner pipe (9).

4. The welding torch (1) according to at least one of Claims 1 to 3, **characterised in that** the insulating body (6) has a lock or a stop (12) for the insulating hose (11).

5. The welding torch (1) according to at least one of Claims 1 to 4, **characterised in that** the insulating body (6) has a polygonal axial cross section.

6. The welding torch (1) according to at least one of Claims 1 to 5, **characterised in that** the insulating body (6) is formed by the insulating hose (11).

7. The welding torch (1) according to at least one of Claims 1 to 6, **characterised in that** the torch connection block (2) is constructed as an insulating body.

8. The welding torch (1) according to at least one of Claims 1 to 7, **characterised in that** a mechanically fixed connection is provided between the torch connection block (2) and the external pipe (5) of the torch neck (3).

9. The welding torch (1) according to Claim 8, **characterised in that** the mechanically fixed connection is a metallic welded connection, a soldered connection, an adhesively bonded connection or a screw connection.

10. The welding torch (1) according to at least one of Claims 1 to 9, **characterised in that** a torch head stop (13) for the insulating hose (11) is provided in the torch head (4).

11. The welding torch (1) according to at least one of Claims 1 to 10, **characterised in that** the insulating body (6) is sealed through to the torch connection block (2) by means of a liquid seal or an O ring.

12. The welding torch (1) according to at least one of Claims 1 to 11, **characterised by** gas supply channels (15) in a region close to the torch connection block (2).

13. The welding torch (1) according to at least one of Claims 1 to 12, **characterised in that** the gas supply channels (15) are formed by means of bores running radially in the inner pipe (9).

14. The welding torch (1) according to at least one of Claims 1 to 13, **characterised by** gas supply channels (10) formed by axially running grooves in the inner pipe (9) and/or in the insulating hose (11).

15. The welding torch (1) according to at least one of Claims 1 to 14, **characterised by** gas supply channels (10) formed by a thread-like structure running on the external side of the inner pipe (9).

16. The welding torch (1) according to at least one of Claims 1 to 15, **characterised in that** at least one gas supply channel (15) is assigned to each gas guide channel (10).

17. The welding torch (1) according to at least one of Claims 1 to 16, **characterised in that** the insulating hose (11) is formed from a glass fibre mesh.

## Revendications

1. Chalumeau de soudage (1) comprenant une arrivée de gaz protecteur, un bloc de raccordement de chalumeau (2), un col de chalumeau (3) se raccordant par une extrémité au bloc de raccordement de chalumeau (2) et une tête de chalumeau (4) prévue sur l'autre extrémité du col de chalumeau (3), le col de chalumeau (3) présentant un tuyau intérieur (9), un tuyau extérieur (5) et un flexible d'isolation (11) prévu entre le tuyau intérieur (9) et le tuyau extérieur (5), **caractérisé en ce qu'**un corps isolant (6) est prévu dans le bloc de raccordement de chalumeau (2), corps par lequel le tuyau intérieur (9) est guidé dans le bloc de raccordement de chalumeau (2), le tuyau intérieur (9) et/ou le flexible d'isolation (11) présentant respectivement sur son côté tourné vers le tuyau extérieur (5) et sur son côté tourné vers le tuyau intérieur (9) des structures formant des canaux de guidage de gaz (10) et le tuyau intérieur (9) présentant des évidements (15) conçus comme des canaux d'arrivée de gaz.

2. Chalumeau de soudage (1) selon la revendication 1, **caractérisé en ce que** le corps isolant (6) présente sur son côté, opposé au col de chalumeau (3), un filetage intérieur (8) pour l'engagement dans un filetage extérieur (8) conçu sur le tuyau intérieur (9).

3. Chalumeau de soudage (1) selon la revendication 1 ou 2, **caractérisé en ce qu'**un joint liquide est prévu entre le filetage intérieur (8) du corps isolant (6) et le filetage extérieur (8) du tuyau intérieur (9).

4. Chalumeau de soudage (1) selon au moins l'une des revendications 1 à 3, **caractérisé en ce que** le corps isolant (6) présente un arrêt ou une butée (12) pour le flexible d'isolation (11).

5. Chalumeau de soudage (1) selon au moins l'une des revendications 1 à 4, **caractérisé en ce que** le corps isolant (6) présente une section axiale polygonale.

6. Chalumeau de soudage (1) selon au moins l'une des revendications 1 à 5, **caractérisé en ce que** le corps isolant (6) est formé par le flexible d'isolation (11).

7. Chalumeau de soudage (1) selon au moins l'une des revendications 1 à 6, **caractérisé en ce que** le bloc de raccordement de chalumeau (2) est conçu comme corps isolant.

8. Chalumeau de soudage (1) selon au moins l'une des revendications 1 à 7, **caractérisé en ce qu'**une liaison mécaniquement fixe est prévue entre le bloc de raccordement de chalumeau (2) et le tuyau extérieur (5) du col de chalumeau (3).

9. Chalumeau de soudage (1) selon la revendication 8, **caractérisé en ce que** la liaison mécaniquement fixe est une liaison soudée métallique, une liaison brasée, une liaison collée ou une liaison vissée.

10. Chalumeau de soudage (1) selon au moins l'une des revendications 1 à 9, **caractérisé en ce qu'**une butée de tête de chalumeau (13) est prévue dans la tête de chalumeau (4) pour le flexible d'isolation (11).

11. Chalumeau de soudage (1) selon au moins l'une des revendications 1 à 10, **caractérisé en ce que** le corps isolant (6) est étanchéifié en direction du bloc de raccordement de chalumeau (2) par un joint liquide ou un joint torique.

12. Chalumeau de soudage (1) selon au moins l'une des revendications 1 à 11, **caractérisé par** des canaux d'arrivée de gaz (15) dans une zone située à proximité du bloc de raccordement de chalumeau (2).

13. Chalumeau de soudage (1) selon au moins l'une des revendications 1 à 12, **caractérisé en ce que** les canaux d'arrivée de gaz (15) sont formés par des alésages agencés radialement dans le tuyau intérieur (9).

14. Chalumeau de soudage (1) selon au moins l'une des revendications 1 à 13, **caractérisé par** des canaux de guidage de gaz (10) formés par des rainures agencées axialement dans le tuyau intérieur (9) et/ou dans le flexible d'isolation (11).

15. Chalumeau de soudage (1) selon au moins l'une des revendications 1 à 14, **caractérisé par** des canaux de guidage de gaz (10) formés par une structure de type filetage agencée sur le côté extérieur du tuyau intérieur (9).

16. Chalumeau de soudage (1) selon au moins l'une des revendications 1 à 15, **caractérisé en ce qu'**au moins un canal d'arrivée de gaz (15) est attribué à chaque canal de guidage de gaz (10).

17. Chalumeau de soudage (1) selon au moins l'une des revendications 1 à 16, **caractérisé en ce que** le flexible d'isolation (11) est formé à base d'un treillis en fibre de verre.
